(19) Europäisches Patentamt
European Patent Office
Office européen des brevets

(11) **EP 3 805 122 B1**

(12) **EUROPEAN PATENT SPECIFICATION**

(45) Date of publication and mention
of the grant of the patent:
**05.07.2023 Bulletin 2023/27**

(21) Application number: **19812623.7**

(22) Date of filing: **24.05.2019**

(51) International Patent Classification (IPC):
**B65D 8/00** *(2006.01)*          **B32B 15/09** *(2006.01)*
**B65D 1/00** *(2006.01)*

(52) Cooperative Patent Classification (CPC):
**B65D 1/165; B21D 22/203; B21D 51/26;**
**B32B 7/12; B32B 15/09; B32B 15/18; B32B 27/36;**
**B65D 25/14;** B05D 2202/10; B05D 2701/10;
B32B 2255/06; B32B 2255/205; B32B 2307/50;
B32B 2307/518; B32B 2307/558;          (Cont.)

(86) International application number:
**PCT/JP2019/020619**

(87) International publication number:
**WO 2019/230588 (05.12.2019 Gazette 2019/49)**

(54) **RESIN-COATED STEEL CAN AND METHOD FOR MANUFACTURING SAME**

HARZBESCHICHTETE STAHLDOSE UND VERFAHREN ZUR HERSTELLUNG DAVON

CANETTE D'ACIER REVÊTUE DE RÉSINE ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.05.2018   JP 2018105402**

(43) Date of publication of application:
**14.04.2021   Bulletin 2021/15**

(73) Proprietor: **Toyo Seikan Co., Ltd.**
**Tokyo 141-8640 (JP)**

(72) Inventors:
• **YANADA, Kenji**
**Yokohama-shi, Kanagawa 230-0001 (JP)**
• **AIHARA, Mitsuhide**
**Yokohama-shi, Kanagawa 230-0001 (JP)**

(74) Representative: **J A Kemp LLP**
**80 Turnmill Street**
**London EC1M 5QU (GB)**

(56) References cited:
WO-A1-2005/025855          JP-A- 2002 240 197
JP-A- 2002 307 632          JP-A- 2002 536 209
JP-A- 2003 081 241          JP-A- 2015 089 643
US-A- 5 059 460

EP 3 805 122 B1

(52) Cooperative Patent Classification (CPC): (Cont.)
B32B 2307/704; B32B 2307/7265; B32B 2307/732;
B32B 2307/734; B32B 2307/736; B32B 2307/748;
B32B 2307/75; B32B 2439/66; B32B 2439/70

**Description**

Technical Field:

The present invention relates to a resin-coated steel can and a method for producing the same. More specifically, the present invention relates to a polyester resin-coated steel can having excellent corrosion resistance. The adhesion is remarkably improved even though the coating is a polyester resin film of a general-purpose composition, and the present invention relates to a method for producing the resin-coated steel can.

Background Art:

Recently, seamless cans have been widely used, and such a seamless can comprises a polyester resin-coated metal sheet. The sheet is prepared by coating a polyester resin on a metal sheet, and then subjecting the sheet to working such as drawing, draw-redrawing, draw-ironing, and thin-wall draw-ironing.

When a polyester resin-coated metal sheet having this general-purpose composition is subjected to severe working such as thin-wall drawing or thin-wall draw-ironing to form a can, the polyester resin coated on the metal sheet needs to be coated in a non-oriented state to obtain excellent workability, thereby preventing peeling of the resin or cracks in the resin during the working.

However, when the resin-coated metal sheet with the polyester resin in a non-oriented state is subjected to the working and subsequently the outer surface of the thus-obtained can is coated and/or printed and then heated for baking, the upper part of the can is heat-set particularly in a state molecular-oriented in the can height direction due to the working. As a result, the stretch of the resin in the circumferential (non-oriented) direction of the can is extremely lowered, whereby the resin may be brittle. In particular, even simple bumping against another can at low temperature may cause cracks in the resin layer. As for the can bottom that is not subjected substantially to working, the resin crystals may be coarse and brittle at the time of heating for baking that is conducted after the coating/printing. This part may be easily cracked similarly when applied with impact particularly at low temperature. In other words, the polyester resin-coated metal sheet in the non-oriented state is inferior in impact resistance after being formed into a can, particularly in impact resistance at low temperature.

In order to improve the impact resistance after forming the thermoplastic resin-coated metal sheet into a can, Patent Document 1 below proposes a thermoplastic resin-coated metal sheet formed by coating a metal sheet with a thermoplastic resin composition obtained by blending a polyester resin with an olefin component such as a polyolefin resin or a polyolefin elastomer, and at least one antioxidant selected from the group consisting of a hindered phenol antioxidant and tocopherol.

Patent Document 2 relates to a resin-coated metal sheet having a metal sheet and, applied on the surface thereof, a coating resin, characterized in that the coating resin comprises two layers of [A] a crystalline saturated polyester resin layer and [B] a resin composition layer comprising (i) a saturated polyester resin and (ii) an ionomer resin, wherein the two layers are laminated in a manner such that the [B] resin composition layer is contacted with the above metal sheet, and wherein a highly crystallized layer is formed in the uppermost surface portion of the [A] crystalline saturated polyester resin layer. Patent Document 2 also relates to a drawn can produced by using the resin-coated metal sheet.

Patent Document 3 relates to a process for producing by simultaneous lamination a polymer/metal/polymer laminate, which process comprises (i) simultaneously laminating to each of the major surfaces of a metal sheet a composite polyester film (A) comprising an inner layer (A1) of a substantially non-crystalline linear polyester having a softening point (Ts-A1) below 200 °C and a melting point (Tm-A1) above 150 °C and below 250 °C and an outer layer (A2) of a biaxially oriented linear polyester having a crystallinity greater than 30% and having a melting point (Tm-A2) above 250 °C, the metal sheet having been heated to a temperature T1 above the softening point (Ts-A1), preferably above the melting point (Tm-A1), of the polyester of inner layer (A1) thereby to cause softening, preferably melting, of the inner layers (A1) and adhesion thereof to the metal sheet, but below the temperature (Tm-A2) at which the outer surface of the outer layer (A2) will melt when in contact with the metal strip at temperature T1, and (ii) re-heating the resultant laminate to a temperature T2 sufficient to cause the polymer films (A1) to interact with and become bound to the respective surface of the metal sheet, but such that the outer surface of the outer layer (A2) remains below temperature (Tm-A2). The laminates formed in accordance with Patent Document 3 are indicated to be ueful for forming into containers or various components thereof.

Prior Art Documents:

Patent Documents:

[Patent Document 1] JP2006-007609
[Patent Document 2] WO 2005/025855
[Patent Document 3] US 5059460

Summary of the invention:

Problem to be solved by the invention:

The thermoplastic resin-coated metal sheet described in Patent Document 1 is expensive because various components are blended in the polyester resin constituting the resin coating. Therefore, there has been demand for a resin-coated metal sheet produced by using a general-purpose polyester resin, exhibiting equivalent performance and excellent in economic efficiency.

For a seamless can (food can) to contain water-boiled seafood, water-boiled meat, and water-boiled vegetables such as sweet corn and green peas, usually a short seamless can prepared by drawing or draw-redrawing is used. For the seamless can, an easy-open lid of a full-open type is used to facilitate a visual check of the can inner surface by a consumer. Since these foods contain high concentrations of salt and they may generate gaseous hydrogen sulfide during heat sterilization and during storage, a seamless can to be filled with the contents is required also to have high resistance against corrosion and also against sulfide stain on the can inner surface.

In some cases, the contents to fill the can may be food (e.g., fish or cooked rice) that need to be steamed inside the can having an exposed flange portion before seaming. Sometimes, the food is subjected to retort sterilization, and thus, adhesion to prevent peeling of the resin coating after the heating is required.

The can outer surface is usually coated or printed. Heat for baking the print or coating may cause crystallization of the polyester resin coating. As a result, the resin coating becomes brittle to cause cracks in the film.

Accordingly, it is an object of the present invention to provide a resin-coated steel can with remarkably improved adhesion of the resin coating and excellent corrosion resistance (impact resistance and barrier property) even when a resin-coated steel sheet having a resin coating made of a polyester resin film of a general-purpose composition excellent in economic efficiency, and a method for producing the resin-coated steel can.

Means for solving the problems:

The present invention provides a resin-coated steel can comprising a drawn or draw-redrawn resin-coated steel sheet having at least a surface serving as a can inner surface coated with a biaxially-stretched polyester film and a surface serving as a coated and/or printed can outer surface. The biaxially-stretched polyester film on the side wall of the can inner surface has a crystallinity of 42 to 52%, and the shrinkage in the can height direction is less than 10% the can height upon raising the temperature of the biaxially-stretched polyester film on the can inner surface side wall from 23°C to 130°C at a rate of 5°C/min.

It is preferable in the resin-coated steel can of the present invention that:

1. the biaxially-stretched polyester film on the polyester resin-coated steel sheet has a biaxial orientation residual rate (residual BO rate) in a range of 30 to 90%; and
2. the biaxially-stretched polyester film on the can inner surface side wall has a peel strength of not less than 6.5N/15mm.

The present invention provides further a method for producing a polyester resin-coated steel can. The method comprises: drawing or draw-redrawing a polyester resin-coated steel sheet having at least a surface serving as a can inner surface coated with a biaxially-stretched polyester film and a surface serving as a coated and/or printed can outer surface; and subjecting the polyester resin-coated steel sheet to post-heating. The heating temperature in the post-heating is in a range of 160 to 200°C and the heating time is not longer than 1.50 seconds. In this Specification, the "post-heating" indicates heating after can forming.

It is preferable in the method for producing the resin-coated steel can of the present invention that:

1. the can side wall is heated by high-frequency heating in the post-heating;
2. a total drawing ratio in the drawing or the draw-redrawing is in a range of 1.5 to 2.5; and
3. the biaxially-stretched polyester film on the resin-coated steel sheet has a biaxial orientation residual rate (residual BO rate) in a range of 30 to 90%.

The biaxial orientation residual rate (residual BO rate) in the present invention is calculated from Equation (1) below.

$$\text{Residual BO rate (\%)} = (I/Io) \times 100 \qquad (1)$$

Here, Io (cps) in the equation is a peak intensity of a biaxially-stretched polyester film before being coated (this may be called also "laminated") on a steel sheet when the highest peak intensity among the peaks in the range of 23 to 29° X-ray diffraction angle 2θ of a polyester film measured by an X-ray diffraction apparatus is defined as a peak intensity of a (100) plane. And I (cps) is a peak intensity of a biaxially-stretched polyester film after being coated on a steel sheet when the highest peak intensity among the peaks in the range of 23 to 29° X-ray diffraction angle 2θ of a polyester film is defined as a peak intensity of a (100) plane.

A value obtained by dividing the peak intensity (Io) by the thickness of the film is defined as a degree of biaxial orientation (cps/um) of the biaxially-stretched polyester film prior to being coated on the steel sheet.

Effect of the Invention:

In production of the resin-coated steel can of the present invention, a steel sheet having a surface serving as a can inner surface coated with a general-purpose biaxially-stretched polyester film and a surface serving as a can outer surface that is coated and/or printed is subjected to drawing or draw-redrawing. Since the sheet is subjected to post-heating, the crystallinity and the shrinkage of the can inner surface side wall of the biaxially-stretched polyester film are within the aforementioned ranges. As a result, a seamless can excellent in adhesion of the resin coating is provided.

Namely, the polyester-resin coated steel sheet is drawn or draw-redrawn to form a can, and later, it is subjected to post-heating at a heating temperature in the range of 160 to 200°C and the heating time of 1.50 seconds or less, thereby relaxing strain generated in the resin coating due to the forming process and reducing the residual stress. In this manner, it is possible to remarkably improve the adhesion of the resin coating of the thus-obtained polyester resin-coated steel can. Even when the can is subjected to steaming or retort sterilization, it is possible to effectively prevent peeling (delamination) of the polyester resin coating.

In the present invention, a "general-purpose" polyester resin (or a biaxially-stretched polyester film) may be any type of polyester resin or a biaxially-stretched polyester film, which is available on the market and is widely used by a person skilled in the art. In the present Specification, this term is used to indicate that the polyester resin is not limited to a special polyester resin prepared by blending with various ingredients, while such a specially prepared polyester resin is not excluded from the present invention.

The residual BO rate of the polyester resin coating indicates that growth of thermal crystal in the biaxially-stretched polyester film is controlled even after the film is heated a plurality of times for baking the coating or print on the resin coated steel sheet. This is effective for preventing embrittlement of the film and thereby preventing effectively the film from cracking.

By the effect of the post-heating conducted at the temperature and time in the aforementioned ranges after the forming, the peel strength of the resin coating on the obtained polyester resin-coated steel can may be remarkably improved.

The resin-coated steel can of the present invention has excellent corrosion resistance, and effectively can prevent corrosion and sulfide stain of the inner surface of the can even when it is filled with a highly corrosive content having a high salt concentration. In the present Specification, the corrosion resistance includes both impact resistance (dent resistance), which means corrosion resistance at the dent portion formed by impact, and a barrier property, which means corrosion resistance against the contents.

Brief Description of the Drawings:

[Fig. 1] : a set of schematic views showing a measurement site for film crystallinity measurement;
[Fig. 2] : a set of schematic views showing a measurement site for measurement of film shrinkage caused by temperature rise; and
[Fig. 3] : a set of schematic views showing a method for measurement of 180° peel strength.

Mode for Carrying out the Invention:

(Resin coated steel can)

In production of the resin-coated steel can of the present invention, a steel sheet having at least a surface serving as a can inner surface coated with a general-purpose biaxially-stretched polyester film and a surface serving as a can outer surface that is coated and/or printed is subjected to drawing or draw-redrawing, and then, subjected to post-heating. The crystallinity of the biaxially-stretched polyester film on the can inner surface side wall is in the range of 42 to 52%, and the shrinkage of the biaxially-stretched polyester film on the can inner surface side wall (the shrinkage in the can height direction when the temperature rises from 23°C to 130°C at a temperature rise rate of 5°C/min) is less than 10% of the can height.

Specifically, in the resin-coated steel can of the present invention, the crystallinity and the shrinkage of the biaxially-stretched polyester film on the can inner surface side wall fall within the above ranges. As a result, the biaxially-stretched polyester film on the can inner surface side wall has a peel strength of not less than 6.5 N/15mm, and particularly not less than 8.0 N/15mm, namely, the adhesion of the resin coating is excellent. The corrosion resistance (impact resistance and barrier property) is also excellent. These are demonstrated by the results in Examples below.

The crystallinity and the shrinkage of the biaxially-stretched polyester film on the can inner surface side wall of the resin-coated steel can of the present invention are adjustable to the aforementioned ranges by using a can body obtained by drawing or draw-redrawing a resin-coated steel sheet having a residual BO rate in a predetermined range and subjecting the can body to a post-heating under specific conditions.

(Method for producing resin-coated steel cans)

The method for producing a resin-coated steel can of the present invention includes: preparing a polyester resin coated steel sheet having at least a surface serving as a can inner surface coated with a biaxially-stretched polyester film and a surface serving as a can outer surface that is coated and/or printed; and subjecting the steel sheet to drawing or draw-redrawing and then subjecting to a post-heating. As mentioned above, the heating temperature during the post-heating is in a range of 160 to 200°C, and the heating time is not more than 1.50 seconds.

In other words, the post-heating after the drawing or the draw-redrawing is conducted under the aforementioned conditions, thereby relaxing the residual strain and improving the adhesion of the polyester resin coating. At the same time, the oriented crystals of the polyester resin coating is maintained, and thus, the crystallinity in the aforementioned range is kept, so that the excellent corrosion resistance also can be provided. When the heating temperature in the post-heating is higher than the range, the oriented crystals of the polyester resin coating may be lost, and the corrosion resistance may deteriorate. When the heating time is longer than the range, the high-speed productivity may deteriorate and the heating equipment may become larger. When the heating temperature is lower, the residual strain of the polyester resin coating cannot be sufficiently relaxed, and the adhesion cannot be improved as compared with the case where the heating temperature is within the range.

[Steel sheet]

For the steel sheet of the present invention, any conventionally known sheets used for forming seamless cans by drawing or draw-redrawing can be used without any particular limitations. Specifically, various surface-treated steel sheets can be used.

The surface-treated steel sheet can be prepared by annealing a cold rolled steel sheet and then subjecting the sheet to either temper rolling or secondary cold rolling, and further subjecting to one or at least two surface treatments such as zinc plating, tin plating, nickel plating, electrolytic chromic acid treatment, chromic acid treatment, and zirconium compound treatment. Alternatively, an aluminum-coated steel sheet subjected to aluminum plating or aluminum pressure welding can be used.

In the present invention, an electrolytic chromic acid treated steel sheet can be suitably used from the viewpoint of coating film adhesion and corrosion resistance.

It is preferable that the thickness of the substrate of the steel sheet is usually in a range of 0.10 to 0.50 mm though it depends on the type of the steel sheet, the application or size of the container. A surface-treated steel sheet preferably has a thickness in a range of 0.10 to 0.30 mm from the viewpoint of strength and formability of the obtained seamless can.

[Biaxially-stretched polyester resin film]

In the present invention, a general-purpose biaxially-stretched polyester resin film can be used as a polyester resin film to be coated at least on a surface serving as a can inner surface.

It is preferable that the polyester resin film to be used is biaxially stretched so that the degree of biaxial orientation falls within the range of 50 to 160 cps/um, whereby the residual BO rate after lamination on a steel sheet falls within the above range.

The polyester resin for constituting the film is suitably an ethylene terephthalate-based polyester resin (hereinafter, this may be referred to as "PET") containing ethylene terephthalate units in an amount of 80 mol% or more.

The ethylene terephthalate-based polyester resin may contain a small amount of other copolymerization components. Examples of the carboxylic acid component other than the terephthalic acid component include: isophthalic acid, naphthalenedicarboxylic acid, p-β-oxyethoxybenzoic acid, biphenyl-4,4'-dicarboxylic acid, diphenoxyethane-4,4'-dicarboxylic acid, 5-sodium sulfoisophthalic acid, hexahydroterephthalic acid, adipic acid, sebacic acid, trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid, biphenyl-3,4,3',4'-tetracarboxylic acid, and dimer acid, though the present invention is not limited to these examples.

Examples of the alcohol components other than ethylene glycol include: propylene glycol, 1,4-butanediol, neopentyl glycol, 1,6-hexylene glycol, diethylene glycol, triethylene glycol, cyclohexanedimethanol, bisphenol-A ethylene oxide adduct, glycerol, trimethylolpropane, pentaerythritol, dipentaerythritol, and sorbitan.

The polyester resin preferably has an intrinsic viscosity (IV) in the range of 0.5 to 1.0 dL/g, particularly preferably in the range of 0.50 to 0. 70 dL/g, measured using a mixed solvent of phenol/tetrachloroethane as a solvent. When the intrinsic viscosity is larger than this range, adhesion between the polyester resin coating and the metal sheet becomes poor. When the intrinsic viscosity is smaller than this range, a molecular weight sufficient for forming a polyester resin film serving as a material cannot be retained.

The polyester resin can be formulated by a known formulation of a compounding agent for a film known per se, for instance, an anti-blocking agent like amorphous silica, a pigment like titanium dioxide, an antistatic agent, an antioxidant, or a lubricant.

In the present invention, the inner surface resin coating can be formed of a multilayer film prepared by arranging an additional layer on the polyester resin film having the above-described properties, but preferably, it is formed of a single layer of the polyester resin film.

The biaxially-stretched polyester resin film preferably has a thickness in the range of 10 to 30 um, particularly 15 to 25 um.

In order to further improve the adhesion of the biaxially-stretched polyester resin film to the steel sheet, an adhesive primer can also be applied to the biaxially-stretched polyester resin film.

As a primer coating material excellent in adhesion and corrosion resistance, a conventionally known primers such as an epoxy phenol-based primer coating material or a polyester phenol-based primer coating material can be used. From the viewpoint of hygiene, a bisphenol-free primer coating material is preferably used, and in particular, a polyester phenol-based primer coating material is preferably used. This is formed from a polyester resin and a resol-type phenol resin derived from an m-cresol as a curing agent. The adhesive primer layer is usually preferably provided to have a thickness of 0.01 to 10 um.

[Outer surface coating]

As the outer surface coating on the surface serving as the can outer surface, the above-described biaxially-stretched polyester resin film used for the inner surface coating can be used, and this can be replaced by a white or transparent resin film used for the conventional resin-coated metal sheet. Alternatively, it is possible to use an ordinary can coating material.

The can coating material may be any protective coating material comprising thermosetting and thermoplastic resins. The examples include: modified epoxy coating materials such as phenol-epoxy coating materials and amino-epoxy coating materials; vinyl or modified vinyl coating materials such as vinyl chloride-vinyl acetate copolymers, partially saponified vinyl chloride-vinyl acetate copolymer, vinyl chloride-vinyl acetate-maleic anhydride copolymers, epoxy-modified-, epoxy amino-modified-or epoxy phenol-modified-vinyl coating materials; acrylic resin-based coating materials; and synthetic rubber-based coating materials such as styrene-butadiene-based copolymers. They can be used alone or as a combination of at least two thereof, and the present invention is not limited to these examples.

[Preparation of resin-coated steel sheet]

The polyester resin-coated steel sheet used for producing the resin-coated steel can of the present invention can be prepared by coating a steel sheet with a biaxially-stretched polyester resin film by any conventionally known method such as heat fusion or dry lamination. In the present invention, it is suitable that the lamination is conducted such that the residual BO rate is in the range of 30 to 90%, in particular 60 to 90%. When the residual BO rate is not less than 30% and less than 60%, the BO control may be slightly difficult during the lamination. Here, the residual BO rate is a ratio of an orientation degree before lamination of the biaxially-stretched polyester film on the steel sheet to an orientation degree after the lamination.

In order to control the residual BO rate within the above range, it is possible to control the total calorie to be applied to the biaxially-stretched polyester film by adjusting the lamination conditions such as the temperature to heat the steel sheet (heating roll temperature), the lamination roll temperature, and the sheet conveying speed according to the degree of biaxial orientation (Io), the thickness and the like of the biaxially-stretched polyester film in use.

In the present invention, it is preferable that the degree of biaxial orientation (I) of the polyester resin coating after lamination is in the range of 15 to 144, particularly 30 to 144 (cps/um) .

As described above, a primer layer can be formed in advance on the biaxially-stretched polyester resin film for a case where the adhesiveness (heat fusibility) between the biaxially-stretched polyester resin film and the steel sheet is poor. Alternatively, lamination can be conducted using for instance a urethane-based adhesive, an epoxy-based adhesive, an acid-modified olefin resin-based adhesive, a copolyamide-based adhesive, or a copolyester-based adhesive.

[Print layer]

In the resin-coated steel can of the present invention, it is preferable that a print layer is further formed on the above-described outer surface coating of a resin-coated steel sheet before drawing or a draw-redrawing. It is needless to note for the resin-coated steel can of the present invention that the print layer can be formed on the outer surface side wall of the formed seamless can. Alternatively, in a case of producing a seamless can by drawing or draw-redrawing at a total drawing ratio of 1.5 to 2.5, the resin-coated steel sheet may be printed in advance so that the resin-coated steel can can be produced more efficiently than printing after can-forming.

Printing on the outer surface coating can be conducted by any conventionally known printing method such as gravure printing, offset printing, flexographic printing, and ink jet printing. It is preferable to form a white coat layer before the printing so as to mask the ground color of the steel sheet, thereby making the printed pattern clear and enhancing the decorative effects imparted by the print. A finishing varnish is applied on the print layer in order to prevent scratches and the like on the printed image.

[Forming of seamless can]

In formation of a seamless can of the present invention, a resin-coated steel sheet is used. As mentioned above, a biaxially-stretched polyester resin film is coated on at least a surface of the sheet serving as the can inner surface, while an outer coating (resin coating or coating film) is provided on the surface serving as the can outer surface, and further a print is applied on the outer coating as required, and this steel sheet is subjected to drawing or draw-redrawing to form the seamless can. More specifically in the present invention, the formed seamless can is heated at a temperature in the range of 160 to 200°C for a time not longer than 1.50 seconds, particularly 0.30 to 1.50 seconds (post-heating). In this manner, the residual strain of the polyester resin coating is relaxed to decrease the shrinkage of the film, thereby enabling to improve the adhesion, as mentioned above. On the other hand, excessive heating may cause the oriented crystals of the polyester resin coating to disappear, thereby degrading the corrosion resistance. For this reason, it is important to heat at the aforementioned temperature for the aforementioned time. When the heating temperature is low or the heating time is short, the residual strain in the polyester resin coating cannot be sufficiently relaxed, and the adhesion of the resin coating cannot be improved sufficiently unlike the case where the heating temperature and time are within the ranges.

In the drawing or the draw-redrawing, the crystallinity of the biaxially-stretched polyester resin film is slightly lowered at the upper part of the side wall of the drawn can. However, the crystallinity may rise to at least 42%, which is approximately the same as that of the lower part of the side wall, by conducting the post-heating under the preferred conditions as mentioned above, though the crystallinity of the polyester film of the general-purpose composition usually does not greatly exceed 52%.

In the outer surface coating step, the outer surface coating is usually heated at a temperature in a range of 160 to 200°C for 7 to 15 minutes, though the conditions may depend on the coating materials to be used, for instance. In the printing step, heating is conducted at a temperature in the range of 140 to 200°C for 3 to 15 minutes, and the number of times of heating depends on the number of ink colors or the like in use, which is followed by a heating at a temperature of 170 to 205°C for 3 to 15 minutes for the purpose of baking the finishing varnish. As mentioned above, baking may be conducted a plurality of times in the method for producing a seamless can. Therefore, when the residual BO rate of the resin coating of the resin-coated steel sheet is low, embrittlement of the resin coating may occur due to the growth of the thermal crystals by heating. On the other hand, when the residual BO rate is high, film delamination is likely to occur from the flange portion at the time of the post-heating. In the present invention, the residual BO rate of the inner surface resin coating of the resin-coated steel sheet is set to a specific range, so that growth of the thermal crystals due to heating is prevented or decreased and the embrittlement of the resin coating is effectively prevented.

After the coating and printing, the resin-coated steel sheet is punched into a disk-shaped blank and subjected to a can-making step. This sheet is set so that the inner surface resin coating makes the can inner surface, and subjected to drawing or draw-redrawing.

In the drawing, a drawing punch and a die are used to shape a drawn cup consisting of a bottom and a side wall.

The draw-redrawing includes a step of pre-drawing to form a pre-drawn cup consisting of a bottom and a side wall by using a die and a pre-drawing punch having a large diameter. This pre-drawn cup is held with a redrawing die and an annular holder inserted in the cup. Then, a redrawing punch, which is provided coaxially with both the holder and the redrawing die and also be able to be freely taken in and out of the holder, and the redrawing die are moved relatively so as to engage with each other, so that the pre-drawn cup is further drawn to be a deep-drawn cup having a smaller diameter in a similar manner. The drawing and redrawing are conducted usually 2 or 3 times, though the present invention is not limited thereto.

The drawing ratio (= blank diameter / punch diameter) is preferably within a range of 1.2 to 1.6, though the present invention is not limited to this range. The total drawing ratio (= blank diameter / final redrawing punch diameter) after a plurality of drawing is preferably within a range of 1.5 to 2.5 though the present invention is not limited thereto. In a case where the diameter at the upper part of the can and the diameter at the bottom part of the can are different from each other, the total drawing ratio is determined as the value obtained by dividing the blank diameter by the can diameter measured at the middle position relative to the can height.

In the drawing and redrawing, the resin-coated steel sheet or the pre-drawn cup may be coated with any of lubricants such as liquid paraffin, synthetic paraffin, edible oil, hydrogenated edible oil, palm oil, natural waxes, or polyethylene wax, for the purpose of forming.

[Post-heating]

The thus-obtained seamless can, or at least at its side wall, is subjected to post-heating at temperature in a range of 160 to 200°C, particularly 170 to 200°C for 1.50 seconds or less, particularly 0.30 to 1.50 seconds.

Though the post-heating is not limited particularly as long as the aforementioned conditions for the temperature and the time are satisfied, heating with high-frequency is particularly preferred. Advantages of the high-frequency heating to other heating means such as an oven include: the installation of the equipment requires less space; the temperature can be raised in a short time; and the heating can be limited to a predetermined site.

In a case where the post-heating of the present invention is conducted by high-frequency heating, the can body side wall of the seamless can is selectively heated. In this case, the aforementioned temperature range of 160 to 200°C indicates an ultimate temperature for the outer surface of the side wall of the seamless can to achieve, and the time necessary for achieving the temperature is determined as a heating time. In a case of oven heating, the aforementioned temperature of 160 to 200°C is the maximum ultimate temperature in the oven, and the time for keeping this maximum ultimate temperature is not longer than 1.50 seconds.

For the high-frequency heating, a high-frequency of 10 to 200 KHz is used though the present invention is not limited thereto. For the high-frequency heating, a heater comprising a high-frequency coil can be used. This heater known per se usually comprises a high-frequency coil, an electrode for connecting the coil to a power source, a magnetic member for increasing the electromagnetic coupling between the coil and the seamless can and for regulating the part to be heated in the seamless can, and a cooling mechanism for cooling the coil.

The drawn and redrawn can is trimmed, necked, flanged, or beaded, for instance, as necessary. These steps can be conducted before the post-heating or after the post-heating.

The resin-coated steel can of the present invention is filled with contents. Subsequently, it may be steamed depending on the contents, and subjected to a lid-seaming step. If necessary, the can may be subjected to retort sterilization and the like.

Examples:

Hereinafter, the present invention will be described more in detail by way of Examples, though the present invention is not limited to these Examples.

<Production of drawn can (seamless can)>

An electrolytic chromic acid-treated steel sheet (thickness: 0.17 mm, metallic chromium content: 100 mg/m$^2$ per surface, chromium hydrated oxide content: 16 mg/m$^2$ per surface) was employed. On at least one surface of this sheet for serving a can inner surface, a single layer of biaxially-stretched polyethylene terephthalate film (thickness: 19 um, isophthalic acid content: 11 mol%, intrinsic viscosity (IV) : 0.64 dl/g) was thermally laminated, and immediately water-cooled to obtain a resin-coated steel sheet.

The residual BO rate of the coating resin of this resin-coated steel sheet was determined from the aforementioned Equation (1) using an X-ray diffractometer (SmartLab3kW manufactured by Rigaku Corporation). The results are shown in Table 1 to Table 3 below.

Thereafter, the surface of the resin-coated steel sheet for serving as the can outer surface was coated and dry-baked in an oven at 180°C for 10 minutes. Later, the coated surface was printed, and further a finishing varnish was applied thereon and dry-baked in the oven at 190°C for 3 minutes.

Then, a circular blank was punched out from the printed resin-coated steel sheet. The blank was drawn and redrawn at the total drawing ratio as shown in Tables 1-3 so that the printed surface would make the can outer surface. The can body was trimmed at the upper end part to form a flange, whereby a drawn can (seamless can) was produced.

<Performance evaluation>

[Film crystallinity measurement]

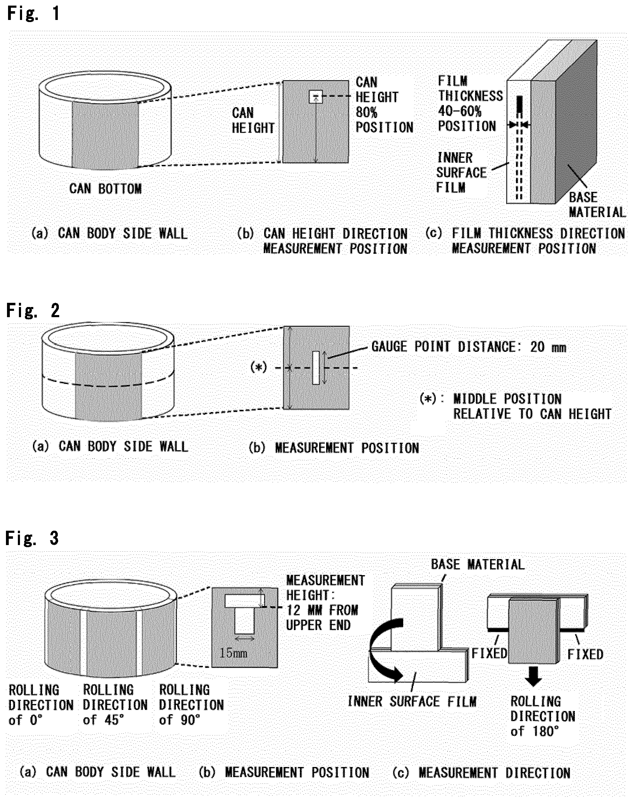

Raman spectrum of the film on the inner surface of each of the resin-coated steel cans in Examples 1-6 and Comparative Examples 1-3 was measured using a Raman spectrophotometer (DXR2xi supplied by Thermo Fisher Scientific K.K.) to calculate the crystallinity from the correlation between the half width of the maximum peak in the range of the Raman shift 1670 to 1780 $cm^{-1}$ and the crystallinity of the polyester film by the density-gradient tube method. The measurement height was set at 80% of the can height from the bottom of the can, and the measurement site in the film thickness direction was set at 40-60% of the film thickness. Fig. 1 is a schematic view showing the measurement site.

[Measurement of film shrinkage caused by temperature rise]

The side wall of each of the resin-coated steel cans in Examples 1-6 and Comparative Examples 1-3, specifically the side wall in the rolling direction of 45°, was immersed in dilute hydrochloric acid to dissolve the base material and isolate the film on the inner surface. Then, the film was cut out to have a width of 5 mm by setting the can cylinder circumferential direction as a width direction. The measurement site was sampled with the initial gauge point distance in the height direction as 20 mm so that the middle position was centered relative to the can height. The film was heated from 23°C to 130°C at 5°C/min. using a thermomechanical analyzer (DS6100 of EXSTAR6000 series manufactured by Seiko Instruments Inc.), and then, the shrinkage in the height direction of the film was measured. Fig. 2 is a schematic view showing the measurement site.

Note that the film shrinkage rate is calculated from the following Equation (2).

$$\text{Film shrinkage rate (\%)} = (S/H) \times 100 \qquad (2)$$

In the equation, S indicates the film shrinkage (mm) at the time the temperature is raised to 130°C, and H indicates the can height (mm).

The film shrinkage rate was evaluated according to the following criteria.

O: less than 10%
×: 10% or more

[Evaluation on delamination occurring from flawed part during retort treatment]

The resin-coated steel cans of Examples 1-6 and Comparative Examples 1-3 were used for the evaluation. At the height of 10 mm from the can upper end of the can body side wall of each of the resin-coated steel cans, the film on the inner surface was flawed in the circumferential direction to a depth reaching the base material. After filling the can with water and seaming the can with the lid, the can was subjected to a retort treatment at 130°C for 80 minutes. After the retort treatment, delamination occurring from the flawed part on the can inner surface was checked.

Delamination occurring from the flawed part during the retort treatment was evaluated according to the following criteria.

◎: No delamination
O: Slight delamination (usable)
×: Severe peeling (unusable)

[Impact resistance and barrier property evaluation (liquid for evaluation)]

Resin-coated steel cans of Examples 1-6 and Comparative Examples 1-3 were filled with a liquid for evaluation (an aqueous solution prepared by dissolving 0.5% acetic acid and 1.0% salt), each sealed by seaming with a lid, and subjected to a retort treatment at 130°C for 80 minutes. After one day, a 1kg metal block having a spherical surface 74 mm in diameter was dropped from the height of 25 mm on the lower part of the can body side wall in the rolling direction of 90° to apply an impact and form a dent. The cans were then stored at 37°C for one month.

The impact resistance was evaluated by observing the corrosion of the part (dent portion) applied with the impact on the can body side wall. The barrier property was evaluated by observing the corrosion of the part not applied with impact (side wall normal portion), the body hook radius portion (BHR portion, the part most bent when the opening of the can is seamed), and the bottom of the can.

The impact resistance and the barrier property were evaluated according to the following criteria.

◎: No corrosion
O: Slight corrosion (usable)
×: Severe corrosion (unusable)

[180° Peel strength measurement]

The film adhesion was evaluated using the resin-coated steel cans of Examples 1-5 and Comparative Example 1 and 4. The total drawing ratio was 2.2. Test pieces were cut out from the respective can body side walls in a manner as shown in Fig. 3, so that the measurement starting position was below from the can upper end by 12 mm at respective positions of the rolling direction of 0°, the rolling direction of 45°, and the rolling direction of 0°. The polyester films were delaminated from the base materials in the direction of 180° using a tensile tester at a tensile rate of 5 mm/min., and the peel strength for a measurement width of 15 mm was measured, from which the average values of the maximum peel strength in the rolling direction of 0°, the rolling direction of 45°, and the rolling direction of 90° were calculated.

The peel strength was evaluated on the following criteria.

◎: The average value of the maximum peel strength measured by using the tensile tester is 8.0 N/15mm or more.
O: The average value of the maximum peel strength measured by using the tensile tester is 6.5 N/15mm or more and less than 8.0 N/15mm.
×: The average value of the maximum peel strength measured by using the tensile tester is less than 6.5 N/15mm.

[Evaluation on steam delamination]

The resin-coated steel cans of Examples 1-5 and Comparative Example 1 and 4 were kept empty and subjected to a retort treatment at 100°C for 50 minutes in order to simulate a steaming step, and then, film delamination at the flange portion was checked.

Steam delamination was evaluated according to the following criteria.

O: No delamination at flange
×: Delamination at flange (unusable)

[Evaluation on impact resistance and barrier property (real content)]

The resin-coated steel cans of Examples 3 and 7-10 were filled with a commercially available product: "Dressing Tuna" as an acetic acid-containing content and a commercially available seasoned tuna as a high salinity content. Each can was double-seamed with a separately-prepared aluminum easy-open-end (EOE) and sealed, and then, subjected to a retort treatment at 120°C for 60 minutes. The can was dented in the manner as mentioned above and stored at 37°C for 12 months. Corrosions at the dent on the side wall, at the side wall normal portion, at the BHR portion and at the can bottom were checked to evaluate the impact resistance and the barrier property. The results are shown in Table 3.

The impact resistance and the barrier property were evaluated according to the following criteria.

◎: No corrosion
O: With slight corrosion
×: With large corrosion (unusable)

(Examples 1-5)

The cans drawn-redrawn in the aforementioned manner to have a total drawing ratio of 2.2 were subjected to post-heating in a high-frequency heater for a heating time of 0.40 seconds so that the respective ultimate temperatures of the outer surface of the respective can body side walls would be 160°C, 170°C, 180°C, 190°C, and 200°C, thereby preparing samples (resin-coated steel cans) of Examples 1-5.

(Example 6)

A drawn can having a total drawing ratio of 1.7 was prepared by drawing-redrawing, which was then subjected to post-heating in a high-frequency heater for a heating time of 0.40 seconds so that the ultimate temperature of the outer surface of the can body side wall would be 180°C, thereby preparing a sample of Example 6.

(Comparative Example 1)

A sample of Comparative Example 1 was prepared in the same manner as in Example 1, except that the post-heating was not conducted.

(Comparative Example 2)

A sample of Comparative Example 2 was prepared in the same manner as in Example 1, except that the post-heating was conducted so that the ultimate temperature of the outer surface of the can body side wall would be 210°C.

(Comparative Example 3)

A sample of Comparative Example 3 was prepared in the same manner as in Example 6, except that post-heating was not conducted.

(Comparative Example 4)

A sample of Comparative Example 4 was prepared in the same manner as in Example 1, except that the post-heating was conducted so that the ultimate temperature of the outer surface of the can body side wall would be 150°C.
Evaluations on the delamination occurring from the flawed part during the retort treatment, the impact resistance and the barrier property (liquid for evaluation) for the resin-coated steel cans of Examples 1-6 and Comparative Examples 1-3 were conducted. The results are shown in Table 1.

[Table 1-1]

| | Residual BO rate after lamination (%) | Total drawing ratio | Post-heating temperature (high-frequency) | Can body side wall crystallinity (%) | Film shrinkage |
|---|---|---|---|---|---|
| Example 1 | 72 | 2.2 | 160°C | 43.5 | ○ |
| Example 2 | 72 | 2.2 | 170°C | 43.3 | ○ |
| Example 3 | 72 | 2.2 | 180°C | 44.9 | ○ |
| Example 4 | 72 | 2.2 | 190°C | 47.0 | ○ |
| Example 5 | 72 | 2.2 | 200°C | 45.0 | ○ |
| Example 6 | 70 | 1.7 | 180°C | 46.5 | ○ |
| Comparative Example 1 | 72 | 2.2 | - | 35.3 | × |
| Comparative Example 2 | 72 | 2.2 | 210°C | 15.6 | ○ |
| Comparative Example 3 | 70 | 1.7 | - | 46.3 | × |

[Table 1-2]

| | Delamination resistance evaluation | Evaluation on corrosion resistance against liquid for evaluation | | | | |
|---|---|---|---|---|---|---|
| | Delamination occurring from flawed part during retort treatment | Impact resistance | Barrier property | | | |
| | | Side wall dent portion | Side wall normal portion | BHR portion | Can bottom | |
| Example 1 | ○ | ○ | ◎ | ◎ | ◎ |
| Example 2 | ◎ | ○ | ◎ | ◎ | ◎ |
| Example 3 | ◎ | ○ | ◎ | ◎ | ◎ |
| Example 4 | ◎ | ○ | ◎ | ◎ | ◎ |
| Example 5 | ◎ | ○ | ◎ | ◎ | ◎ |
| Example 6 | ◎ | ○ | ◎ | ◎ | ◎ |
| Comparative Example 1 | × | ○ | ○ | ◎ | ◎ |
| Comparative Example 2 | ◎ | ○ | × | ◎ | ◎ |
| Comparative Example 3 | × | ○ | ○ | ◎ | ◎ |

Table 1 demonstrates that the resin-coated steel cans of Examples 1-6 are excellent in delamination resistance, impact resistance and barrier property. The resin-coated steel cans of Examples 2-6 are particularly excellent in delamination resistance.

The delamination resistance is insufficient in Comparative Example 1 and 3. And the film shrinkage in Comparative Examples 1 and 3 is greater than that in any of Examples 1-6 each including the step of post-heating. The causes are presumed as follows. That is, the draw-redrawing imparts residual stress to the inner surface film. Due to this stress, the power to shrink the film in the can body side wall height direction surpasses the adhesion between the polyester resin coating layer and the base material during the retort sterilization, whereby the delamination resistance got degraded.

In Comparative Example 2, the barrier property of the can body side wall is insufficient. The reason is considered as follows. That is, since the post-heating temperature is high in Comparative Example 2, the crystallinity of the can body side wall is extremely small, and a large part of the biaxially-stretched crystals of the polyester resin coating of the general-purpose composition was lost, and this caused degradation in the barrier property to the content.

Table 2 shows the results of evaluation on the can body side wall peel strength and the steam delamination in Examples 1-5 and Comparative Examples 1 and 4.

[Table 2]

| | Residual BO rate after lamination (%) | Total drawing ratio | Post-heating temperature (high-frequency) | Peel strength at can body side wall (N/15mm) | Steam delamination evaluation |
|---|---|---|---|---|---|
| Example 1 | 72 | 2.2 | 160°C | ○ | ○ |
| Example 2 | 72 | 2.2 | 170°C | ◎ | ○ |
| Example 3 | 72 | 2.2 | 180°C | ◎ | ○ |
| Example 4 | 72 | 2.2 | 190°C | ◎ | ○ |
| Example 5 | 72 | 2.2 | 200°C | ◎ | ○ |
| Comparative Example 1 | 72 | 2.2 | - | × | × |

(continued)

| | Residual BO rate after lamination (%) | Total drawing ratio | Post-heating temperature (high-frequency) | Peel strength at can body side wall (N/15mm) | Steam delamination evaluation |
|---|---|---|---|---|---|
| Comparative Example 4 | 72 | 2.2 | 150°C | × | × |

Table 2 demonstrates that the peel strength is improved by high-frequency heating. A peel strength of 6.5 N/15mm or more was obtained by heating at or above 160°C. Further, it is confirmed that the peel strength was improved in particular by heating at a temperature at or above 170°C.

As for Comparative Examples 1 and 4, the evaluation on steam delamination indicates that the peel strength is low. It is considered from the result that the products are unusable due to delamination at the flange portion.

(Examples 7-10)

Samples of Examples 7-10 were prepared in the same manner as in Example 3, except that the respective residual BO rates after lamination was set to 87%, 57%, 47%, and 33%.

(Comparative Examples 5-6)

Samples of Comparative Examples 5-6 were prepared in the same manner as in Example 3, except that the respective residual BO rates after lamination was set to 25% and 96%.

Table 3 shows the results of evaluation of impact resistance and barrier property (real contents) in Example 3 and 7-10, and Comparative Examples 5-6.

[Table 3-1]

| | Residual BO rate after lamination (%) | Total drawing ratio | Post-heating temperature (high-frequency) |
|---|---|---|---|
| Example 7 | 87 | 2.2 | 180°C |
| Example 3 | 72 | 2.2 | 180°C |
| Example 8 | 57 | 2.2 | 180°C |
| Example 9 | 47 | 2.2 | 180°C |
| Example 10 | 33 | 2.2 | 180°C |
| Comparative Example 5 | 25 | 2.2 | 180°C |
| Comparative Example 6 | 96 | 2.2 | 180°C |

[Table 3-2]

| | Real content corrosion resistance evaluation | | | | | | | |
|---|---|---|---|---|---|---|---|---|
| | "Dressing Tuna" | | | | Seasoned tuna | | | |
| | Impact resistance | Barrier property | | | Impact resistance | Barrier property | | |
| | Side wall dent portion | Side wall normal portion | BHR portion | Can bottom | Side wall dent portion | Side wall normal portion | BHR portion | Can bottom |
| Example 7 | ○ | ◎ | ◎ | ◎ | ○ | ◎ | ◎ | ◎ |
| Example 3 | ○ | ◎ | ◎ | ◎ | ○ | ◎ | ◎ | ◎ |

(continued)

| | Real content corrosion resistance evaluation | | | | | | | |
| --- | --- | --- | --- | --- | --- | --- | --- | --- |
| | "Dressing Tuna" | | | | Seasoned tuna | | | |
| | Impact resistance | Barrier property | | | Impact resistance | Barrier property | | |
| | Side wall dent portion | Side wall normal portion | BHR portion | Can bottom | Side wall dent portion | Side wall normal portion | BHR portion | Can bottom |
| Example 8 | ○ | ◎ | ◎ | ◎ | ○ | ◎ | ◎ | ◎ |
| Example 9 | ○ | ◎ | ◎ | ◎ | ○ | ◎ | ◎ | ◎ |
| Example 10 | ○ | ◎ | ◎ | ◎ | ○ | ◎ | ◎ | ◎ |
| Comparative Example 5 | × | ◎ | ◎ | ◎ | × | ◎ | ◎ | ◎ |
| Comparative Example 6 | ○ | × | × | ◎ | ○ | × | × | ◎ |

Table 3 shows that the seamless cans of Example 3 and 7-10 are excellent in the impact resistance and the barrier property.

In Comparative Example 5 having a residual BO rate of 25%, corrosion in the dent portion was found.

In Comparative Example 6 having a residual BO rate of 96%, corrosion of the can body side wall was found. This corrosion is seemingly caused by insufficient adhesion of the film treated in the can making process.

Therefore, from the viewpoint of impact resistance and barrier property, it is considered that a suitable range of the residual BO rate in the resin-coated steel sheet is 30 to 90%.

Industrial applicability:

The resin-coated steel can of the present invention is a seamless can having an inner surface resin coating made of a biaxially-stretched polyester resin film having a general-purpose composition excellent in economic efficiency. Since the can has an excellent adhesion of the resin coating and has excellent corrosion resistance, it can be suitably used as a container to be filled with a content having a high corrosiveness and a high salt concentration, fish or cooked rice to be steamed, or a content that needs retort sterilization.

**Claims**

1. A resin-coated steel can comprising a drawn or draw-redrawn resin-coated steel sheet having at least a surface serving as a can inner surface coated with a biaxially-stretched polyester film and a surface serving as a coated and/or printed can outer surface,
wherein the biaxially-stretched polyester film on the side wall of the can inner surface has a crystallinity of 42 to 52%, and the shrinkage in the can height direction is less than 10% of the can height upon raising the temperature of the biaxially-stretched polyester film on the can inner surface side wall from 23°C to 130°C at a rate of 5°C/min.

2. The resin-coated steel can according to claim 1, wherein the biaxially-stretched polyester film on the resin-coated steel sheet has a biaxial orientation residual rate (residual BO rate) in a range of 30 to 90%.

3. The resin-coated steel can according to claim 1 or 2, wherein the biaxially-stretched polyester film on the can inner surface side wall has a peel strength of not less than 6.5 N/15mm.

4. A method for producing a resin-coated steel can as claimed in claim 1, comprising:

   drawing or draw-redrawing a resin-coated steel sheet having at least a surface serving as a can inner surface coated with a biaxially-stretched polyester film and a surface serving as a coated and/or printed can outer surface; and subjecting the resin-coated steel sheet to post-heating,

wherein temperature for heating in the post-heating is in a range of 160 to 200°C and time for heating is not longer than 1.50 seconds.

5. The method for producing a resin-coated steel can according to claim 4, wherein the can side wall is heated by high-frequency heating in the post-heating.

6. The method for producing a resin-coated steel can according to claim 4 or 5, wherein the biaxially-stretched polyester film on the resin-coated steel sheet has a biaxial orientation residual rate (residual BO rate) in a range of 30 to 90%.

7. The method for producing a resin-coated steel can according to any one of claims 4 to 6, wherein a total drawing ratio in the drawing or the draw-redrawing is in a range of 1.5 to 2.5.

**Patentansprüche**

1. Harzbeschichtete Stahldose, die ein ziehgepresstes, tiefziehgepresstes harzbeschichtetes Stahlblech mit mindestens einer als Doseninnenfläche dienenden Oberfläche umfasst, die mit einer biaxial gereckten Polyesterfolie beschichtet ist, und einer als beschichtete und/oder bedruckte Dosenaußenfläche dienenden Oberfläche, wobei die biaxial gestreckte Polyesterfolie auf der Seitenwand der Doseninnenfläche eine Kristallinität von 42 bis 52 % aufweist und die Schrumpfung in der Dosenhöhenrichtung weniger als 10 % der Dosenhöhe beträgt, wenn die Temperatur der biaxial gestreckten Polyesterfolie auf der Seitenwand der Doseninnenfläche von 23 °C auf 130 °C mit einer Rate von 5 °C/min erhöht wird.

2. Harzbeschichtete Stahldose nach Anspruch 1, wobei die biaxial gestreckte Polyesterfolie auf dem harzbeschichteten Stahlblech eine Restrate der biaxialen Orientierung (Rest-BO-Rate) in einem Bereich von 30 bis 90 % aufweist.

3. Harzbeschichtete Stahldose nach Anspruch 1 oder 2, wobei die biaxial gestreckte Polyesterfolie auf der inneren Oberflächenseitenwand der Dose eine Schälfestigkeit von nicht weniger als 6,5 N/15 mm aufweist.

4. Verfahren zur Herstellung einer harzbeschichteten Stahldose nach Anspruch 1, das Folgendes umfasst:

Ziehpressen oder Tiefziehpressen eines harzbeschichteten Stahlblechs mit mindestens einer als Doseninnenfläche dienenden Oberfläche, die mit einer biaxial gereckten Polyesterfolie beschichtet ist, und einer als beschichtete und/oder bedruckte Dosenaußenfläche dienenden Oberfläche; und Unterziehen des harzbeschichteten Stahlblechs einer Nacherwärmung, wobei die Temperatur zum Erhitzen beim Nacherhitzen in einem Bereich von 160 bis 200°C liegt und die Zeit zum Erhitzen nicht länger als 1,50 Sekunden ist.

5. Verfahren zur Herstellung einer harzbeschichteten Stahldose nach Anspruch 4, wobei die Dosenseitenwand beim Nacherwärmen durch Hochfrequenzerwärmung erhitzt wird.

6. Verfahren zur Herstellung einer harzbeschichteten Stahldose nach Anspruch 4 oder 5, wobei die biaxial gestreckte Polyesterfolie auf dem harzbeschichteten Stahlblech eine Restrate der biaxialen Orientierung (Rest-BO-Rate) in einem Bereich von 30 bis 90 % aufweist.

7. Verfahren zur Herstellung einer harzbeschichteten Stahldose nach einem der Ansprüche 4 bis 6, wobei ein Gesamtziehpressverhältnis beim Ziehpressen oder Tiefziehpressen in einem Bereich von 1,5 bis 2,5 liegt.

**Revendications**

1. Boîte en acier revêtue de résine comprenant une tôle d'acier revêtue de résine étirée ou réétirée ayant au moins une surface servant de surface intérieure de boîte revêtue d'un film de polyester étiré biaxialement et une surface servant de surface extérieure de boîte revêtue et/ou imprimée, dans laquelle le film de polyester étiré biaxialement sur la paroi latérale de la surface intérieure de boîte a une cristallinité de 42 à 52 %, et le rétrécissement dans la direction de la hauteur de la boîte est inférieur à 10 % de la hauteur de la boîte lors de l'augmentation de la température du film de polyester étiré biaxialement sur la paroi latérale de la surface intérieure de boîte de 23°C à 130°C à un taux de 5°C/min.

**2.** Boîte en acier revêtue de résine selon la revendication 1, dans laquelle le film de polyester étiré biaxialement sur la tôle d'acier revêtue de résine a un taux résiduel d'orientation biaxiale (taux résiduel de BO) dans une plage de 30 à 90 %.

**3.** Boîte en acier revêtue de résine selon la revendication 1 ou 2, dans laquelle le film de polyester étiré biaxialement sur la paroi latérale de la surface intérieure de boîte a une résistance au pelage non inférieure à 6,5 N/15 mm.

**4.** Procédé de production d'une boîte en acier revêtue de résine selon la revendication 1, comprenant :

l'étirage ou l'étirage-réétirage d'une tôle d'acier revêtue de résine ayant au moins une surface servant de surface intérieure de boîte revêtue d'un film polyester étiré biaxialement et une surface servant de surface extérieure de boîte revêtue et/ou imprimée ; et la soumission de la tôle d'acier revêtue de résine à un post-chauffage, dans lequel la température de chauffage lors du post-chauffage est dans une plage de 160 à 200°C et le temps de chauffage n'est pas supérieur à 1,50 seconde.

**5.** Procédé de production d'une boîte en acier revêtue de résine selon la revendication 4, dans lequel la paroi latérale de la boîte est chauffée par chauffage à haute fréquence lors du post-chauffage.

**6.** Procédé de production d'une boîte en acier revêtue de résine selon la revendication 4 ou 5, dans lequel le film de polyester étiré biaxialement sur la tôle d'acier revêtue de résine a un taux résiduel d'orientation biaxiale (taux résiduel de BO) dans une plage de 30 à 90 %.

**7.** Procédé de production d'une boîte en acier revêtue de résine selon l'une quelconque des revendications 4 à 6, dans lequel un rapport d'étirage total lors de l'étirage ou de l'étirageréétirage est dans une plage de 1,5 à 2,5.

**Fig. 1**

(a) CAN BODY SIDE WALL      (b) CAN HEIGHT DIRECTION      (c) FILM THICKNESS DIRECTION
                                     MEASUREMENT POSITION             MEASUREMENT POSITION

**Fig. 2**

(a) CAN BODY SIDE WALL      (b) MEASUREMENT POSITION

**Fig. 3**

(a) CAN BODY SIDE WALL      (b) MEASUREMENT POSITION      (c) MEASUREMENT DIRECTION

18

**EP 3 805 122 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006007609 A
- WO 2005025855 A

- US 5059460 A